# EUROPEAN PATENT APPLICATION

(11) **EP 4 830 915 A1**
(43) Date of publication of application: **28.10.2026**
(21) Application number: 24906860.2
(22) Date of filing: 03.10.2024
(51) Int. Cl.: B32B 27/18

(54) **MOISTURE-ABSORBING SHEET FOR ABSOLUTE DRYNESS**

(30) Priority: 19.12.2023 JP 2023214245
(71) Applicant: Toyo Seikan Group Holdings, Ltd., Shinagawa-ku Tokyo 141-8627 (JP)
(72) Inventor: OKUYAMA, Shinpei, Tokyo 141-8627 (JP); OBU, Yusuke, Tokyo 141-8627 (JP); HAYASHI, Kenji, Tokyo 141-8627 (JP)
(74) Representative: J A Kemp LLP
(86) International application number: PCT/JP2024/035413
(87) International publication number: WO 2025/134471

(57) **Abstract**

A hygroscopic sheet for absolute dryness to be used for an adherend having a water content of 2500 ppm or less is formed by laminating a resin layer (A), a hygroscopic layer, and a resin layer (B) in this order, the hygroscopic layer being formed of a binder resin having a Tg of 0°C or less, the binder resin being an olefin-based resin, the binder resin containing from 5 to 20 wt% of calcium oxide having a median size (D50) of 20 µm or less, the resin layer (A) and the resin layer (B) each being a skin layer or a pressure-sensitive adhesive layer, the resin layer (A) and the resin layer (B) each having a thickness of from 3 to 20 ¡.tm, the hygroscopic layer having a thickness of from 20 to 30 µm.

## Description

### Technical Field

The present invention relates to a hygroscopic sheet, and more particularly, to a hygroscopic sheet for absolute dryness to be used for an adherend having a low water content.

### Background Art

In the related art, hygroscopic sheets including a hygroscopic layer in which a desiccant is dispersed (also referred to as water-absorbing sheets or desiccant sheets) have been widely used for moisture absorption and moisture prevention.

As such hygroscopic sheets, sheets having various layer configurations have been proposed. Patent Literature 1 proposes a hygroscopic sheet including a desiccant layer, a moisture permeable sheet provided on one surface of the desiccant, and a pressure-sensitive adhesive layer provided on the other surface of the desiccant layer, and describes that, for example, a cellophane sheet, an acetate sheet, and a nylon sheet are used as the moisture permeable sheet.

Further, Patent Literatures 2 and 3 describe a desiccant sheet including a hygroscopic layer in which a desiccant is dispersed.

Incidentally, electronic devices developed in recent years, such as an organic electroluminescence (organic EL) display, a solar cell panel, a liquid crystal touch panel, and an electronic paper, are vulnerable to charge leakage, and thus plastic base materials forming their circuit boards or the circuit boards themselves need to be dried until they have an extremely low water content (absolutely dry state).

The sheets described in Patent Literatures 1 to 3 are recognized to have a certain level of hygroscopic effect on an adherend having a high water content. However, since the plastic base materials or the circuit boards are dried to a certain extent in the production process thereof, the water content is already low, and it is difficult to dry an adherend having a low water content such as the plastic base materials or the circuit boards to an absolutely dry state.

Therefore, products requiring an extremely low water content, such as plastic base materials and circuit boards, need to be dried by batch processing through heating in a nitrogen atmosphere, such as in a glove box, or in a vacuum environment. However, such batch processing involves a limited volume of the glove box, failing to dry a large amount of adherends, and thus results in a problem of low treatment efficiency. In addition, the humidity in the glove box needs to achieve an extremely low humidity environment, and the construction of such a dry environment is very complicated.

Thus, a more efficient method for bringing plastic base materials, circuit boards, and the like into an absolutely dry state is required.

### Citation List

### Patent Literature

Patent Literature 1: JP 2006-326838 A
Patent Literature 2: JP 2019-177645 A
Patent Literature 3: JP 2019-179705 A

### Summary of Invention

### Technical Problem

An object of the present invention is to provide a hygroscopic sheet for absolute dryness that dries an adherend having a low water content to an absolutely dry state.

### Solution to Problem

The inventors of the present invention have found that, in a resin film containing calcium oxide as a desiccant, an adherend having a low water content can be brought into an absolutely dry state by selecting conditions such as the particle size and concentration of calcium oxide, and have completed the present invention.

The present invention provides a hygroscopic sheet for absolute dryness to be used for an adherend having a water content of 2500 ppm or less,
the hygroscopic sheet being formed by laminating a resin layer (A), a hygroscopic layer, and a resin layer (B) in this order,
the hygroscopic layer being formed of a binder resin having a Tg of 0°C or less,
the binder resin being an olefin-based resin, the binder resin containing from 5 to 20 wt% of calcium oxide having a median size (D50) of 20 µm or less,
the resin layer (A) and the resin layer (B) each being a skin layer or a pressure-sensitive adhesive layer,
the resin layer (A) and the resin layer (B) each having a thickness of from 3 to 20 µm,
the hygroscopic layer having a thickness of from 20 to 30 µm.

In the hygroscopic sheet of the present invention, the following embodiments can be preferably adopted.
(1) The adherend has a water content of 2000 ppm or less.
(2) The hygroscopic sheet is held as a roll body in a state of being laminated adjacently on the adherend or with an adhesive layer of 4 µm or less interposed therebetween.

The present invention also provides an absolute drying method including laminating the hygroscopic sheet for absolute dryness described above adjacently on the adherend or with an adhesive layer of 4 µm or less interposed therebetween and allowing the laminate to stand at 23°C for 7 days to reduce a water content of the adherend to 100 ppm or less.

### Advantageous Effects of Invention

The hygroscopic sheet of the present invention can be used for an adherend having a low water content to dry the adherend to an absolutely dry state.

The hygroscopic sheet of the present invention can be held as a roll body in a state of being laminated adjacently on an adherend or with an adhesive layer interposed therebetween. This provides a higher drying efficiency than batch processing.

Furthermore, the hygroscopic sheet of the present invention can be dried more easily than batch processing because the adherend can be brought into an absolutely dry state at room temperature.

### Brief Description of Drawings

FIG. 1 is a diagram illustrating an example of a layer structure of a hygroscopic sheet of the present invention.
FIG. 2 is a diagram illustrating an example of a layer structure in a state where the hygroscopic sheet of the present invention is bonded to an adherend.
FIG. 3 is a diagram illustrating another example of a layer structure in a state where the hygroscopic sheet of the present invention is bonded to an adherend.
FIG. 4 is a diagram illustrating an example in a state where the hygroscopic sheet of the present invention bonded to an adherend is formed into a roll.
FIG. 5 is a diagram illustrating an example of a layer structure in a state where multiple hygroscopic sheets of the present invention are bonded to multiple adherends.

### Description of Embodiments

### Hygroscopic Sheet 1

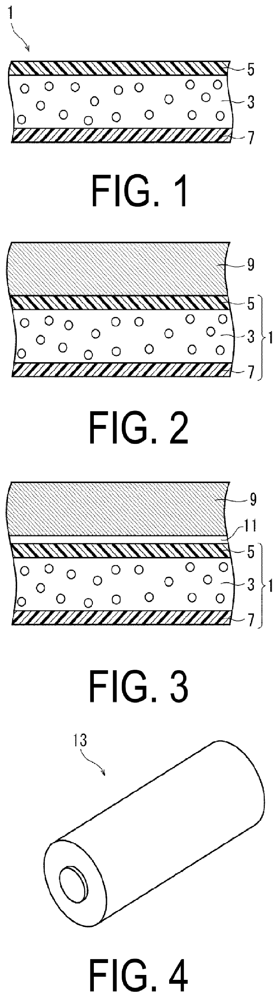

As illustrated in FIG. 1, a hygroscopic sheet 1 of the present invention is formed by laminating a resin layer (A) 5, a hygroscopic layer 3, and a resin layer (B) 7 in this order. The hygroscopic sheet 1 is formed by laminating each layer by coextrusion.

The thickness of the hygroscopic sheet 1 of the present invention is set to a thickness to such an extent that the target water absorption amount is achieved according to the amount of calcium oxide blended in the hygroscopic layer 3, and is generally in the range of from 26 to 70 µm, and particularly preferably in the range of from 30 to 65 µm. When the thickness of the hygroscopic sheet 1 is smaller than 26 µm, the amount of the calcium oxide particles is insufficient, and the dryness is lowered. In addition, the strength of the hygroscopic sheet 1 is lowered, and the hygroscopic sheet 1 is easily broken. On the other hand, when the thickness of the hygroscopic sheet 1 is larger than 70 µm, the excessive thickness increases unnecessary cost.

The variation in the thickness of the hygroscopic sheet 1 of the present invention is desirably within a range of ± 6 µm, preferably ± 5 µm. In particular, when the variation in the thickness of the hygroscopic sheet 1 in the width direction exceeds ± 6 µm, the winding pressure in the roll width direction varies when the hygroscopic sheet 1 is formed in a long roll, and as a result, partial sagging occurs in the hygroscopic sheet 1. This is because the partial sagging may cause processing defects such as occurrence of wrinkles when the hygroscopic sheet 1 is bonded to an adherend 9.

The hygroscopic sheet 1 of the present invention may be colored. In a case of coloring, it is possible to impart designability. When the resin layer (A), the resin layer (B), and the hygroscopic layer described later are formed, it is possible to produce a colored hygroscopic sheet 1 by mixing a desired pigment with a resin forming any one or some of the layers.

Each layer constituting the hygroscopic sheet 1 of the present invention will be described below.

### Hygroscopic Layer 3

The hygroscopic layer 3 is a layer formed between the resin layer (A) 5 and the resin layer (B) 7. The hygroscopic layer 3 is formed of a binder resin containing calcium oxide serving as a desiccant.

### Calcium Oxide

In the present invention, calcium oxide is used as the desiccant. Calcium oxide is a type of chemical desiccant that chemically reacts with water. Calcium oxide is suitably used as a desiccant because it has moderate water reactivity, has a granular shape that is stably maintained, and is relatively inexpensive.

The reaction scheme of calcium oxide and water is represented by the following formula.

CaO + H₂O → Ca(OH)₂

The median size (D50) of calcium oxide as the desiccant is 20 µm or less, preferably 10 µm or less, and more preferably 5 µm or less. The median size is measured as a volume-based particle size by, for example, a laser diffraction scattering method, and is the particle size at which the value of the cumulative distribution reaches 50%. When the median size (D50) of calcium oxide is larger than 20 µm, the dryness is lowered, and therefore, it becomes difficult to bring the adherend 9 into an absolutely dry state. In addition, there is a concern that particles may be exposed from the binder resin and transferred to the adherend 9.

Since calcium oxide is mixed with a resin and formed as the hygroscopic layer 3, it is desirable to select calcium oxide having a particle size smaller than the thickness of the hygroscopic layer 3. This is because, when particles having a particle size larger than the thickness of the hygroscopic layer 3 are contained, the particles may be exposed from the binder resin and transferred to the adherend 9 as described above, further leading to problems of defects formed in the hygroscopic layer 3 or roughened surface of the layer, whereby the layer eventually fails to sufficiently exhibit its original hygroscopic function.

Calcium oxide is preferably contained in a range of from 5 to 20 wt%, particularly from 8 to 18 wt%, in the hygroscopic layer 3 formed by mixing with the binder resin. When the content of calcium oxide is smaller than 5 wt%, the dryness is lowered, and therefore, it becomes difficult to bring the adherend 9 into an absolutely dry state. On the other hand, when the content of calcium oxide is larger than 20 wt%, the particles may aggregate and thus be exposed from the binder resin and transferred to the adherend 9, or the processability of the sheet itself may be reduced.

Note that calcium oxide may be surface-treated with a small amount of a surface treating agent, for example, a higher fatty acid metal salt such as zinc stearate or calcium stearate, to enhance the dispersibility in the resin, as long as the dryness is not impaired.

### Binder Resin

In the present invention, as a resin in which calcium oxide is dispersed, that is, the binder resin, a resin having a Tg (glass transition temperature of the resin) of 0°C or lower is used. This is because the resin having a Tg of 0°C or lower becomes soft in a rubber-like state at room temperature and is easy to move at low temperatures, whereby the movement of moisture is activated and the dryness of the hygroscopic sheet 1 for the adherend 9 becomes favorable. In the present invention, an olefin-based resin is preferably used as such a binder resin having a Tg of 0°C or lower.

In addition, the olefin-based resin is suitable as the binder resin also because the water content of the resin itself is small and the performance of the desiccant can be sufficiently exhibited.

In the present invention, the dispersion of calcium oxide serving as the desiccant in the resin is performed by melt-kneading calcium oxide in the above-described amount with the resin, and the resin composition prepared by the melt-kneading is melt-extruded to form the hygroscopic layer 3. In the formation of the hygroscopic layer 3, as in Examples described later, a desiccant master batch can be formed in advance and then kneaded with the binder resin, and as a base material of the desiccant master batch, a material that can be kneaded with the binder resin of the hygroscopic layer 3 and allows the formation can be used.

The thickness of such a hygroscopic layer 3 is set to a thickness that achieves the target water absorption amount according to the amount of calcium oxide blended in the hygroscopic layer 3, and is generally in the range of from 20 to 30 µm, and particularly preferably in the range of from 22 to 28 µm.

When the thickness of the hygroscopic layer 3 is smaller than 20 µm, the amount of the calcium oxide particles is insufficient, and the dryness is lowered. On the other hand, when the thickness of the hygroscopic layer 3 is larger than 30 µm, unnecessary cost increases.

### Resin Layer (A) 5

The resin layer (A) 5 is a layer provided on one surface of the hygroscopic sheet 1. The resin layer (A) 5 is a skin layer or a pressure-sensitive adhesive layer. The resin layer (A) 5 can prevent moisture permeation from the outside to the hygroscopic layer 3, and the drying function of the hygroscopic sheet 1 can be maintained for a long period of time.

When the resin layer (A) 5 is a skin layer, a thermoplastic resin or the like is generally applied, and for example, a resin such as low-density polyethylene (LDPE) can be used.

When the resin layer (A) 5 is a pressure-sensitive adhesive layer, resins having adhesiveness, for example, ethylene-vinyl acetate copolymer (EVA), soft polyolefin (LLDPE), metallocene polyolefin-based elastomer, or the like can be used.

The thickness of the resin layer (A) 5 is from 3 to 20 µm, and preferably from 5 to 18 µm. When the thickness of the resin layer (A) 5 is smaller than 3 µm, the calcium oxide particles may be exposed and transferred to the adherend 9. On the other hand, when the thickness of the resin layer (A) 5 is larger than 20 µm and in a case where the resin layer (A) 5 is provided on the adherend 9 side, the distance to the adherend 9 is increased, and therefore, the dryness is lowered. In addition, in a case where the resin layer (A) 5 is provided on the side opposite to the adherend 9, the thickness is excessive in suppression of moisture permeation from the outside. Further, even in a case where the resin layer (A) 5 is provided at any position, if the thickness of the resin layer (A) 5 is excessive, the thickness of the entire hygroscopic sheet 1 becomes large, which leads to a concern that bonding the hygroscopic sheet 1 to the adherend 9 to form a roll body 13 described below becomes difficult.

### Resin Layer (B) 7

The resin layer (B) 7 is a layer provided on the other surface of the hygroscopic sheet 1 (that is, the surface on the side opposite to the resin layer (A) 5). The resin layer (B) 7 is a skin layer or a pressure-sensitive adhesive layer. The presence of the resin layer (B) 7 can prevent moisture permeation from the outside to the hygroscopic layer, and the drying function of the hygroscopic sheet 1 can be maintained for a long period of time.

As the skin layer or the pressure-sensitive adhesive layer of the resin layer (B) 7, the same resin types as those of the resin layer (A) 5 can be used. The thickness of the resin layer (B) 7 is also preferably from 3 to 20 µm, and more preferably from 5 to 18 µm, for the same reason as that for the resin layer (A) 5.

### Adherend 9

The hygroscopic sheet 1 of the present invention is used for drying the adherend 9. The adherend 9 is characterized in that the water content is 2500 ppm or less, preferably 2000 ppm or less. That is, by using the hygroscopic sheet 1 of the present invention, the adherend 9 already having a low water content can be dried to an absolutely dry state.

The hygroscopic sheet 1 of the present invention can dry the adherend 9 by being laminated adjacently on the adherend 9 or with an adhesive layer interposed therebetween. FIG. 2 illustrates a layer configuration in a case where the hygroscopic sheet 1 is adjacent to the adherend 9, and FIG. 3 illustrates a layer configuration in a case where the hygroscopic sheet 1 is laminated by being bonded to the adherend 9 with an adhesive layer 11.

When the hygroscopic sheet 1 is adjacent to the adherend 9, the resin layer (A) 5 or the resin layer (B) 7 is in contact with the adherend 9. With the resin layer (A) 5 or the resin layer (B) 7 in contact being a pressure-sensitive adhesive layer, the hygroscopic sheet 1 is bonded to the adherend 9.

When the hygroscopic sheet 1 and the adherend 9 are laminated with the adhesive layer 11 interposed therebetween, the hygroscopic sheet 1 and the adherend 9 are fixed by the adhesive layer 11. The thickness of the adhesive layer is 4 µm or less, and generally from 1 to 3 µm.

Note that, as the adhesive forming the adhesive layer 11, an epoxy-based or urethane-based dry laminate adhesive is preferably used.

As illustrated in FIG. 4, the hygroscopic sheet 1 of the present invention may be wound around a core material in a state of being laminated adjacently on the adherend 9 or with an adhesive layer interposed therebetween, and held as a roll body 13. By using the roll body 13, the adherend 9 can be efficiently dried in a small space.

When the roll body 13 is stored as it is for a long period of time, it is preferable to store the roll body 13 in an aluminum bag or the like in a state of being degassed and sealed in order to prevent moisture permeation from the outside.

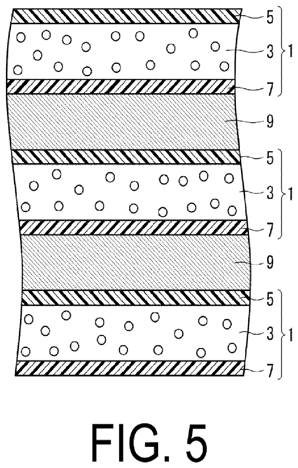

A plurality of the hygroscopic sheets 1 of the present invention may be used with the adherend 9 interposed therebetween. For example, as illustrated in FIG. 5, by sandwiching the adherend 9 between the hygroscopic sheets 1 in the order of hygroscopic sheet 1 - adherend 9 - hygroscopic sheet 1 - adherend 9 - hygroscopic sheet 1, the adherend 9 is dried more efficiently, and moisture permeation from the outside to the adherend is suppressed.

In such a case, in each hygroscopic sheet 1, the resin layer (A) 5 or the resin layer (B) 7 facing the adherend 9 is a pressure-sensitive adhesive layer, or an adhesive layer is present between each hygroscopic sheet 1 and the adherend 9, whereby each hygroscopic sheet 1 is bonded and fixed to the adherend 9.

In addition, the hygroscopic sheet 1 and the adherend 9 are held as the roll body 13 in a state of being laminated adjacently or with an adhesive layer of 4 µm or less interposed therebetween, whereby a configuration of hygroscopic sheet 1 - adherend 9 - hygroscopic sheet 1 - adherend 9 - hygroscopic sheet 1 can be naturally formed.

In addition, to form the roll body 13 in a state where the hygroscopic sheet 1 of the present invention and the adherend 9 are combined, it is preferable that the adherend 9 also has flexibility.

The adherend 9 is required to have an extremely low water content, and examples thereof include a flexible resin substrate used for organic EL or solar cells. Such a resin substrate can be widely used as a member of, for example, electronic device products, such as solar cell modules and organic EL products (e.g., organic EL lighting and organic EL displays) and a backsheet member used in these products.

Such an adherend 9 is formed of a polyester resin, a polyamide resin, a polyimide resin, a polycarbonate resin, an olefin-based resin, a cyclic olefin-based resin, or the like, and is preferably formed of a polyester resin, a polyamide resin, an olefin-based resin, or a cyclic olefin-based resin. As the polyester resin, polyethylene terephthalate (PET) and polyethylene naphthalate (PEN) are particularly preferable.

The thickness of the adherend 9 is generally in the range of from 12 to 300 µm, and particularly preferably in the range of from 30 to 200 µm.

Such an adherend 9 may have a metal electrode, a transparent electrode, a refractive index adjusting layer, a metal oxide layer, or the like.

### Drying Method

The drying of the adherend 9 using the hygroscopic sheet 1 of the present invention does not need to be performed in a low humidity environment employing a glove box or the like, and thus the drying treatment is simple. The room temperature for drying the adherend 9 is generally from 18 to 28°C. The relative humidity at room temperature is from 45 to 65% RH.

In the present invention, by allowing the adherend 9 to stand under such conditions for at least 7 days, the water content of the adherend 9 can be brought into an absolutely dry state of 100 ppm or less, preferably 80 ppm or less, and more preferably 50 ppm or less. For example, by laminating the hygroscopic sheet of the present invention adjacently on the adherend 9 or with an adhesive layer of 4 µm or less interposed therebetween to form a roll body and allowing the roll body to stand at 23°C for 7 days in a state of being sealed in an aluminum bag, the water content of the adherend 9 can be reduced to 100 ppm or less.

### Examples

Excellent effects of the hygroscopic sheet of the present invention will be described in the following Experimental Examples.

### Preparation of Calcium Oxide-Containing Master Batch

Pellets of linear low-density polyethylene (LLDPE) were prepared as a base resin of a calcium oxide-containing master batch.

Calcium oxide powder was prepared as a chemical desiccant, adjusted to a desired particle size using a mill, and kneaded with the base resin pellets to prepare a calcium oxide (CaO)-containing master batch (a) having a calcium oxide content of 10 wt%.

Note that a calcium oxide-containing master batch prepared in the same manner using polypropylene (PP) as the base resin was designated as a calcium oxide-containing master batch (b); a calcium oxide-containing master batch prepared in the same manner using ethylene-vinyl acetate copolymer (EVA) as the base resin was designated as a calcium oxide-containing master batch (c); a calcium oxide-containing master batch prepared in the same manner using a cyclic olefin copolymer (COC) as the base resin was designated as a calcium oxide-containing master batch (d); and a calcium oxide-containing master batch prepared in the same manner using polyethylene terephthalate (PET) as the base resin was designated as a calcium oxide-containing master batch (e).

Further, a zeolite-containing master batch was prepared in the same manner using a linear low-density polyethylene (LLDPE) as the base resin and zeolite as a desiccant.

### Production of Adherend

A polyethylene terephthalate (PET) film having a size of 10 cm × 10 cm and a thickness of 100 µm was left to stand at 23°C and 50% RH for seven days to prepare a PET film (A) having a water content of 2400 ppm as an adherend.

Similarly, a PET film having a size of 10 cm × 10 cm and a thickness of 100 µm was left to stand at 23°C and 40% RH for seven days to prepare a PET film (B) having a water content of 1900 ppm as an adherend.

### Dryness Test

Each hygroscopic sheet produced in each Experimental Example described later was cut into three sheets having a size of 11 cm × 11 cm. As illustrated in FIG. 5, a laminate was prepared by alternately stacking three hygroscopic sheets and two adherend PET films. As the adherends, the PET film (A) or the PET film (B) was used.

The laminate was put in an aluminum bag, and the bag was degassed and sealed. After storage in this state under the conditions of 23°C and 50% RH for 7 days, the water content and the presence of appearance defects (presence of transfer marks of the desiccant, and the like) of each film serving as the adherend were checked.

The water content was measured with a Karl Fischer moisture meter CA-310 (available from Nittoseiko Analytech Co., Ltd.). The vaporization temperature was set at 200°C.

The evaluation criteria for the water content of the adherends after drying are listed below.

### Evaluation Criteria for Water Content of Adherends

⊚: 50 ppm or less
○: More than 50 ppm and 100 ppm or less
×: More than 100 ppm

The water content was calculated by the following formula.

### Water content [ppm]

### = Detected water content [µg]/Weight of adherend [g]

The evaluation criteria for appearance defects are listed below.

### <Evaluation Criteria for Appearance Defects>

○: No appearance defects
×: Appearance defects such as transfer marks of calcium oxide particles observed

In the case where the resin layer (A) or the resin layer (B) in the hygroscopic sheet facing the adherend was a pressure-sensitive adhesive layer, the adherend and the hygroscopic sheet were fixed by the pressure-sensitive adhesive layer. In the case where the resin layer (A) or the resin layer (B) in the hygroscopic sheet facing the adherend was a skin layer, the skin layer and the adherend were laminated with a 3-µm dry laminate-type adhesive interposed therebetween and forming an adhesive layer, thereby bonding and fixing the hygroscopic sheet to the adherend.

### Method for Measuring Tg of Binder Resin

Tg of the binder resins was measured using a viscoelasticity measuring apparatus DMS6100 (available from Seiko Instruments Inc.).

### Method for Measuring Median Size (D50) of Calcium Oxide Particles

The median size (D50) of the calcium oxide particles was measured using a particle size analyzer SALD-3100 (available from Shimadzu Corporation).

### Experimental Example 1

A calcium oxide-containing master batch (a) was prepared as a desiccant-containing master batch, and further, a low-density polyethylene (LDPE) having a Tg of -100°C was prepared as a binder resin, a low-density polyethylene (LDPE) was prepared as a resin for forming a skin layer of the resin layer (A), and a metallocene polyolefin-based elastomer was prepared as a resin for forming a pressure-sensitive adhesive layer of the resin layer (B).

A resin composition for forming a hygroscopic layer obtained by mixing the binder resin (LDPE) with the calcium oxide-containing master batch (a) such that the content of the desiccant component (CaO) was 10 parts by weight (i.e., 10 wt%) relative to 90 parts by weight of the resin component, the LDPE as a resin composition for forming the resin layer (A), and the metallocene polyolefin-based elastomer as a resin composition for forming the resin layer (B) were fed into an extruder. A hygroscopic sheet was formed by coextrusion so that the thickness of the resin layer (A) was 10 µm, the thickness of the hygroscopic layer was 25 µm, and the thickness of the resin layer (B) was 10 µm.

Note that the median size (D50) of the calcium oxide particles contained in the above sheet was 2 µm.

The PET film (A) was used as an adherend used for the dryness evaluation and the appearance evaluation.

### Experimental Example 2

A hygroscopic sheet was formed in the same manner as in Experimental Example 1, except that the adherend used for the dryness evaluation and the appearance evaluation was changed to the PET film (B).

### Example 3

A hygroscopic sheet was formed in the same manner as in Experimental Example 1, except that the thickness of the resin layer (A) was 3 µm, the thickness of the hygroscopic layer was 25 µm, and the thickness of the resin layer (B) was 3 µm.

### Example 4

A hygroscopic sheet was formed in the same manner as in Experimental Example 1, except that the thickness of the resin layer (A) was 20 µm, the thickness of the hygroscopic layer was 25 µm, and the thickness of the resin layer (B) was 20 µm.

### Experimental Example 5

A hygroscopic sheet was formed in the same manner as in Experimental Example 1, except that the resin layer (B) was a skin layer formed of LDPE and having a thickness of 10 µm.

### Experimental Example 6

A hygroscopic sheet was formed in the same manner as in Experimental Example 1, except that the thickness of the hygroscopic layer was 20 µm.

### Experimental Example 7

A hygroscopic sheet was formed in the same manner as in Experimental Example 1, except that the thickness of the hygroscopic layer was 30 µm.

### Experimental Example 8

A hygroscopic sheet was formed in the same manner as in Experimental Example 1, except that the amount of calcium oxide blended in the hygroscopic layer was changed to 5 wt%.

### Experimental Example 9

A hygroscopic sheet was formed in the same manner as in Experimental Example 1, except that the amount of calcium oxide blended in the hygroscopic layer was changed to 20 wt%.

### Experimental Example 10

A hygroscopic sheet was formed in the same manner as in Experimental Example 1, except that the median size (D50) of the calcium oxide particles blended in the hygroscopic layer was 20 µm.

### Experimental Example 11

A hygroscopic sheet was formed in the same manner as in Experimental Example 1, except that polypropylene (PP) having a Tg of 0°C was used as the binder resin and the calcium oxide master batch (b) was used to form the hygroscopic layer.

### Experimental Example 12

A hygroscopic sheet was formed in the same manner as in Experimental Example 1, except that an ethylene-vinyl acetate copolymer (EVA) having a Tg of -42°C was used as the binder resin and the calcium oxide master batch (c) was used to form the hygroscopic layer.

### Experimental Example 13

A hygroscopic sheet was formed in the same manner as in Experimental Example 1, except that the thickness of the resin layer (A) was 1 µm, the thickness of the hygroscopic layer was 25 µm, and the thickness of the resin layer (B) was 1 µm.

### Experimental Example 14

A hygroscopic sheet was formed in the same manner as in Experimental Example 1, except that the thickness of the resin layer (A) was 10 µm, the thickness of the hygroscopic layer was 10 µm, and the thickness of the resin layer (B) was 10 µm.

### Experimental Example 15

A hygroscopic sheet was formed in the same manner as in Experimental Example 1, except that the amount of calcium oxide blended in the hygroscopic layer was changed to 3 wt%.

### Experimental Example 16

A hygroscopic sheet was formed in the same manner as in Experimental Example 1, except that the amount of calcium oxide blended in the hygroscopic layer was changed to 30 wt%.

### Experimental Example 17

A hygroscopic sheet was formed in the same manner as in Experimental Example 1, except that the median size (D50) of the calcium oxide particles blended in the hygroscopic layer was 35 µm.

### Experimental Example 18

A hygroscopic sheet was formed in the same manner as in Experimental Example 1, except that a cyclic olefin copolymer (COC) having a Tg of 80°C was used as the binder resin and the calcium oxide master batch (d) was used to form the hygroscopic layer.

### Experimental Example 19

A hygroscopic sheet was formed in the same manner as in Experimental Example 1, except that polyethylene terephthalate (PET) having a Tg of 70°C was used as the binder resin and the calcium oxide master batch (e) was used to form the hygroscopic layer.

### Experimental Example 20

A hygroscopic sheet was formed in the same manner as in Experimental Example 1, except that the zeolite-containing master batch was used to form the hygroscopic layer.

The samples prepared in Experimental Examples 1 to 20 were evaluated by each procedure described above, and the results are listed in Table 1.

| Experimental Example | Resin layer (A) | | | Resin layer (B) | | | Hygroscopic layer | | | | | Adherend | Evaluation | |
|---|---|---|---|---|---|---|---|---|---|---|---|---|---|---|
| | Type | Thickness (µm) | Resin type | Type | Thickness (µm) | Resin type | Thickness (µm) | Binder Resin | | Calcium oxide | | | Water content of adherend after drying | Appearance of adherend after drying |
| | | | | | | | | Resin type | Tg (°C) | Median size (D50) | Blending amount (mass%) | | | |
| 1 | Skin layer | 10 | LDPE | Pressure-sensitive adhesive laver | 10 | Metallocene polyolefin-based elastomer | 25 | LDPE | -100 | 2 µm | 10 | PET film (A) | ⊚ 40 ppm | ○ |
| 2 | Skin layer | 10 | LDPE | Pressure-sensitive adhesive layer | 10 | Metallocene polyolefin-based elastomer | 25 | LDPE | -100 | 2 µm | 10 | PET film (B) | ⊚ 21 ppm | ○ |
| 3 | Skin layer | 3 | LDPE | Pressure-sensitive adhesive layer | 3 | Metallocene polyolefin-based elastomer | 25 | LDPE | -100 | 2 µm | 10 | PET film (A) | ⊚ 40 ppm | ○ |
| 4 | Skin layer | 20 | LDPE | Pressure-sensitive adhesive layer | 20 | Metallocene polyolefin-based elastomer | 25 | LDPE | -100 | 2 µm | 10 | PET film (A) | ⊚ 49 ppm | ○ |
| 5 | Skin layer | 10 | LDPE | Skin layer | 10 | LDPE | 25 | LDPE | -100 | 2 µm | 10 | PET film (A) | ⊚ 42 ppm | ○ |
| 6 | Skin layer | 10 | LDPE | Pressure-sensitive adhesive layer | 10 | Metallocene polyolefin-based elastomer | 20 | LDPE | 100 | 2 µm | 10 | PET film (A) | ⊚ 49 ppm | ○ |
| 7 | Skin layer | 10 | LDPE | Pressure-sensitive adhesive layer | 10 | Metallocene polyolefin-based elastomer | 30 | LDPE | -100 | 2 µm | 10 | PET film (A) | ⊚ 23 ppm | ○ |
| 8 | Skin layer | 10 | LDPE | Pressure-sensitive adhesive layer | 10 | Metallocene polyolefin-based elastomer | 25 | LDPE | -100 | 2 µm | 5 | PET film (A) | ○ 75 ppm | ○ |
| 9 | Skin layer | 10 | LDPE | Pressure-sensitive adhesive layer | 10 | Metallocene polyolefin-based elastomer | 25 | LDPE | -100 | 2 µm | 20 | PET film (A) | ⊚ 15 ppm | ○ |
| 10 | Skin layer | 10 | LDPE | Pressure-sensitive adhesive layer | 10 | Metallocene polyolefin-based elastomer | 25 | LDPE | -100 | 20 µm | 10 | PET film (A) | ○ 59 ppm | ○ |
| 11 | Skin layer | 10 | LDPE | Pressure-sensitive adhesive layer | 10 | Metallocene polyolefin-based elastomer | 25 | PP | 0 | 2 µm | 10 | PET film (A) | ○ 55 ppm | ○ |
| 12 | Skin layer | 10 | LDPE | Pressure-sensitive adhesive layer | 10 | Metallocene polyolefin-based elastomer | 25 | EVA | -42 | 2 µm | 10 | PET film (A) | ⊚ 48 ppm | ○ |
| 13 | Skin layer | 1 | LDPE | Pressure-sensitive adhesive layer | 1 | Metallocene polyolefin-based elastomer | 25 | LDPE | 100 | 2 µm | 10 | PET film (A) | ⊚ 40 ppm | × Transfer mark of calcium oxide particles |
| 14 | Skin layer | 10 | LDPE | Pressure-sensitive adhesive layer | 10 | Metallocene polyolefin-based elastomer | 10 | LDPE | -100 | 2 µm | 10 | PET film (A) | × 101 ppm | ○ |
| 15 | Skin layer | 10 | LDPE | Pressure-sensitive adhesive layer | 10 | Metallocene polyolefin-based elastomer | 25 | LDPE | -100 | 2 µm | 3 | PET film (A) | × 108 ppm | ○ |
| 16 | Skin layer | 10 | LDPE | Pressure-sensitive adhesive layer | 10 | Metallocene polyolefin-based elastomer | 25 | LDPE | -100 | 2 µm | 30 | PET film (A) | ⊚ 19 ppm | × Transfer mark of calcium oxide particles |
| 17 | Skin layer | 10 | LDPE | Pressure-sensitive adhesive layer | 10 | Metallocene polyolefin-based elastomer | 25 | LDPE | -100 | 35 µm | 10 | PET film (A) | ○ 66 ppm | × Transfer mark of calcium oxide particles |
| 18 | Skin layer | 10 | LDPE | Pressure-sensitive adhesive layer | 10 | Metallocene polyolefin-based elastomer | 25 | COC | 80 | 2 µm | 10 | PET film (A) | × 109ppm | ○ |
| 19 | Skin layer | 10 | LDPE | Pressure-sensitive adhesive layer | 10 | Metallocene polyolefin-based elastomer | 25 | PET | 70 | 2 µm | 10 | PET film (A) | × 110 ppm | ○ |
| 20 | Skin layer | 10 | LDPE | Pressure-sensitive adhesive layer | 10 | Metallocene polyolefin-based elastomer | 25 | LDPE | -100 | 2 µm | 10 | PET film (A) | × 130 ppm | ○ |

### Reference Signs List

1: Hygroscopic sheet
3: Hygroscopic layer
5: Resin layer (A)
7: Resin layer (B)
9: Adherend
11: Adhesive layer
13: Roll body

## Claims

1. A hygroscopic sheet for absolute dryness to be used for an adherend having a water content of 2500 ppm or less,
the hygroscopic sheet being formed by laminating a resin layer (A), a hygroscopic layer, and a resin layer (B) in this order,
the hygroscopic layer being formed of a binder resin having a Tg of 0°C or less,
the binder resin being an olefin-based resin, the binder resin containing from 5 to 20 wt% of calcium oxide having a median size (D50) of 20 µm or less,
the resin layer (A) and the resin layer (B) each being a skin layer or a pressure-sensitive adhesive layer,
the resin layer (A) and the resin layer (B) each having a thickness of from 3 to 20 µm,
the hygroscopic layer having a thickness of from 20 to 30 µm.

2. The hygroscopic sheet for absolute dryness according to claim 1, wherein the adherend has a water content of 2000 ppm or less.

3. The hygroscopic sheet for absolute dryness according to claim 1 or 2, wherein the hygroscopic sheet is held as a roll body in a state of being laminated adjacently on the adherend or with an adhesive layer of 4 µm or less interposed therebetween.

4. An absolute drying method comprising laminating the hygroscopic sheet for absolute dryness described in claim 1 or 2 adjacently on the adherend or with an adhesive layer of 4 µm or less interposed therebetween and allowing the laminate to stand at 23°C for 7 days to reduce a water content of the adherend to 100 ppm or less.
